# EUROPEAN PATENT SPECIFICATION

(11) **EP 2 830 875 B1**
(45) Date of publication and mention of the grant of the patent: **25.05.2016**
(21) Application number: 13714523.1
(22) Date of filing: 27.03.2013
(51) Int. Cl.: B32B 5/24, B32B 13/04, B32B 15/04, C09K 21/02, B32B 9/04

(54) **FIRE RESISTANT COMPOSITE STRUCTURE**
FEUERFESTE VERBUNDSTRUKTUR
STRUCTURE COMPOSITE RÉSISTANT AU FEU

(30) Priority: 30.03.2012 US 201261618044 P
(43) Date of publication of application: 04.02.2015
(73) Proprietor: Dow Global Technologies LLC, Midland, MI 48674 (US)
(72) Inventor: KIM, Dongkyu, Midland, Michigan 48642 (US); HAN, Chan, Midland, Michigan 48642 (US); CIESLINSKI, Robert C., Midland, Michigan 48642 (US); VAIRO, Giuseppe, I-42015 Correggio (IT); BERTUCELLI, Luigi, 42100 Reggio Nell'emilia (IT)
(74) Representative: Beck Greener
(86) International application number: PCT/US2013/034118
(87) International publication number: WO 2013/148846

(56) References cited:
- DE-A1- 4 120 125
- US-A1- 2010 304 165

## Description

### Field of Disclosure

The present disclosure relates generally to fire resistant composite structures, and more particularly to fire resistant composite structures having a foam material and a geopolymer thermal protection layer.

### Background

Geopolymers are inorganic polymers. Geopolymers can be formed by reacting geopolymer precursors, such as aluminosilicate oxides and alkali silicates. Industrial by-products such as fly ashes, mine tailings, and/or bauxite residues, may be utilized to form some geopolymers.

Geopolymers have been used for various applications. Geopolymers can be advantageous, as compared to some other materials, in that geopolymers can utilize by-products currently treated as wastes to provide useful and valuable products and/or geopolymers can enhance product features across building materials markets. Additional uses of geopolymers are desirable.

### Summary

The present disclosure provides a fire resistant composite structure having a foam material located between a first facing and a second facing, a first geopolymer thermal protection layer located between the foam material and the first facing material, wherein the first geopolymer thermal protection layer is formed by curing geopolymer precursors having a silicon to aluminum mole ratio in a range of 1.0:0.1 to 1.0:3.3, and a second geopolymer thermal protection layer located between the foam material and the second facing.

### Brief Description of the Figures

Figure 1A illustrates a portion of a fire resistant composite structure.
Figure 1B is cross-sectional view of Figure 1A taken along cut line 1A-1A of Figure 1A.
Figure 2 is cross-sectional view of a fire resistant composite structure in accordance with a number of embodiments of the present disclosure.
Figure 3 is cross-sectional view of a fire resistant composite structure in accordance with a number of embodiments of the present disclosure.

### Detailed Description

Fire resistant composite structures having a foam material, a geopolymer thermal protection layer, and a facing are described herein. Embodiments of the present disclosure can provide improved fire resistance as compared to other panel approaches, such as panels not having the geopolymer thermal protection. Additionally, embodiments of the present (disclosure can provide improved fire resistance as compared to other panel approaches, such as panels having a geopolymer layer that is formed from a composition that differs from the geopolymer precursor compositions used to form the a geopolymer thermal protection layer of the fire resistant composite structures disclosed herein. The geopolymer thermal protection layer is formed from a geopolymer precursor composition having a silicon to aluminum mole ratio of 1.0:0.1 to 1.0:3.3. Surprisingly, geopolymers, e.g., the geopolymer thermal protection layer, formed from geopolymer precursor compositions having a silicon to aluminum mole ratio of 1.0:0.1 to 1.0:3.3 can have improved strength and/or fire resistance as compared to other geopolymers that are formed from compositions with other silicon to aluminum mole ratio.

The fire resistant composite structures disclosed herein, may be useful for a variety of applications. For example, the fire resistant composite structures may be employed as structural insulating panels. Structural insulating panels can be used as a building material. Structural insulating panels can include a foam material, e.g., a layer of rigid foam, sandwiched between a first facing and a second facing, e.g., two layers of a structural board. The structural board can be organic and/or inorganic. For example, the structural board can be a metal, metal alloy, gypsum, plywood, and combinations thereof, among other types of board.

Structural insulating panels may be used in variety of different applications, such as walling, roofing, and/or flooring. Structural insulating panels may be utilized in commercial buildings, residential buildings, and/or freight containers, for example. Structural insulating panels may help to increase energy efficiency of buildings and/or containers utilizing the panels, as compared to other buildings or containers that do not employ structural insulating panels.

Structural insulating panels have desirable stability and durability properties. For example, structural insulating panels can last throughout the useful lifetime of the building or container employing the panels. Thereafter, the panels can be reused or recycled.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

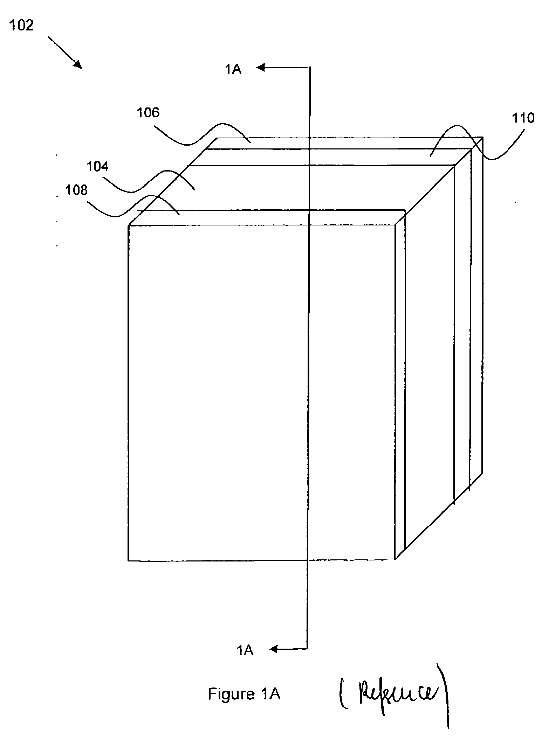

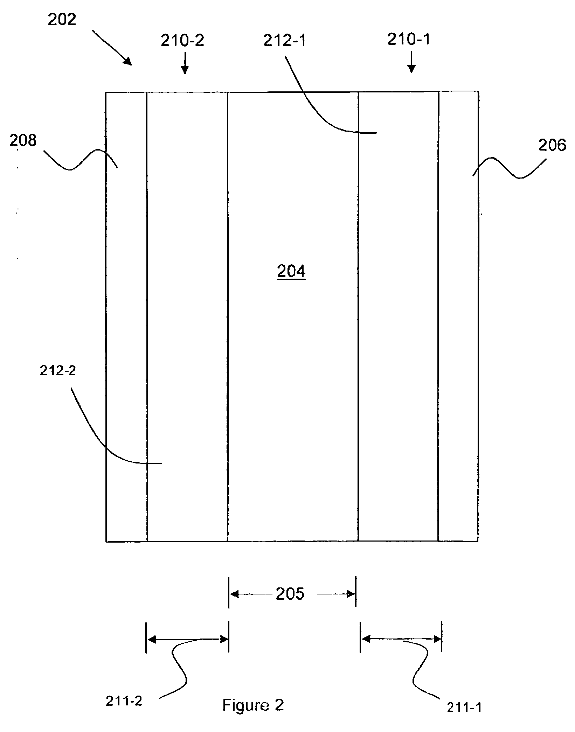

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1A, and a similar element may be referenced as 204 in Figure 2. An element including an associated digit may also be referred to without reference to a specific figure. For example, element "02" may be referenced in the description without reference to a specific figure.

Figure 1A illustrates of a portion of a fire resistant composite structure 102. The fire resistant composite structures may be referred to as sandwich panels, structural insulating panels or self-supporting insulating panels, among other references. The fire resistant composite structure 102 is a composite building material that may be utilized for a variety of applications. The fire resistant composite structure 102 can include a foam material 104, a first facing 106, a second facing 108, and a geopolymer thermal protection layer 110.

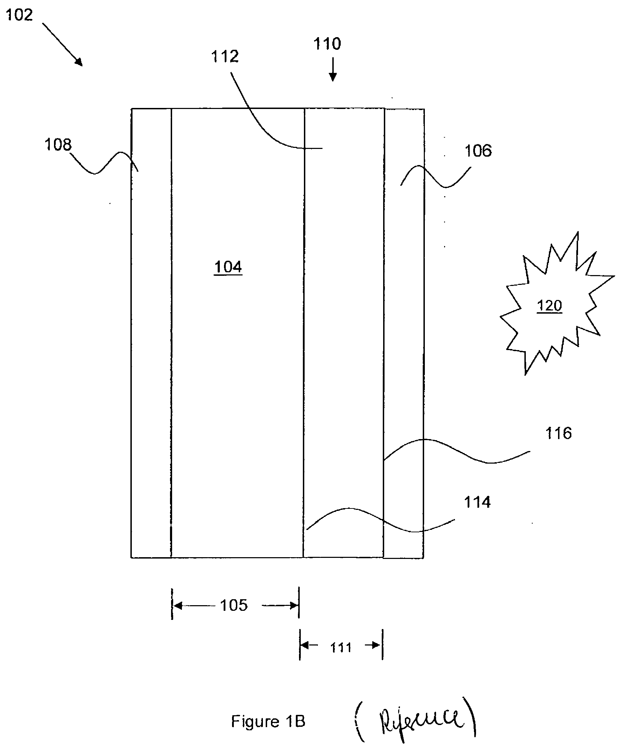

Figure 1B is cross-sectional view of Figure 1A taken along cut line 1A-1A of Figure 1A. As illustrated in Figure 1B, the geopolymer thermal protection layer 110, which includes geopolymer 112, can be adhered to the foam material 104.

The foam material 104 may be thermoset foam, e.g. a polymeric foam that has been formed by an irreversible reaction to a cured state. The foam material 104 may be a polyisocyanurate foam, a polyurethane foam, a phenolic foam, and combinations thereof, among other thermoset foams. As an example, the foam material 104 may be a rigid polyurethane/polyisocyanurate (PU/PIR) foam. Polyisocyanurate foams can be formed by reacting a polyol, e.g., a polyester glycol, and an isocyanate, e.g., methylene diphenyl diisocyanate and/or poly(methylene diphenyl diisocyanate), where the number of equivalents of isocyanate groups is greater than that of isocyanate reactive groups and stoichiometric excess is converted to isocyanurate bonds, for example, the ratio may be greater than 1.8. Polyurethane foams can be formed by reacting a polyol, e.g., a polyester polyol or a polyether polyol, and an isocyanate, e.g., methylene diphenyl diisocyanate and/or poly(methylene diphenyl diisocyanate), where the ratio of equivalents of isocyanate groups to that of isocyanate reactive groups is less than 1.8. Phenolic foams can be formed by reacting a phenol, e.g., carbolic acid, and an aldehyde, e.g., formaldehyde. Forming the foam material 104 may also include employing a blowing agent, a surfactant, and/or a catalyst.

The foam material 104 can have a thickness 105 of 5 millimeters to 300 millimeters. All individual values and subranges from 5 millimeters to 300 millimeters are included herein and disclosed herein; for example, the foam material can have a thickness from a lower limit of 5 millimeters, 7.5 millimeters, or 10 millimeters to an upper limit of 300 millimeters, 250 millimeters, or 200 millimeters. For example, the foam material can have a thickness of 5 millimeters to 300 millimeters, 7.5 millimeters to 250 millimeters, or 10 millimeters to 200 millimeters.

As illustrated in Figure 1B, the foam material 104 is located between the first facing 106 and the second facing 108 of fire resistant composite structure 102. The first facing 106 and the second facing 108 may be a suitable material for composite building materials. For example, in accordance with a number of embodiments of the present disclosure the first facing 106 and the second facing 108 can each independently be formed from aluminum, steel, stainless steel, copper, glass fiber-reinforced plastic, gypsum, or a combination thereof, among other materials. The first facing 106 and the second facing 108 can each independently have a thickness of 0.05 millimeters to 25.00 millimeters. All individual values and subranges from 0.05 millimeters to 25.00 millimeters are included herein and disclosed herein; for example, the first facing 106 and the second facing 108 can each independently have a thickness from a lower limit of 0.05 millimeters, 0.10 millimeters, or 0.20 millimeters to an upper limit of 25.00 millimeters, 20.00 millimeters, or 15.00 millimeters. For example, the first facing 106 and the second facing 108 can each independently have a thickness of 0.05 millimeters to 25.00 millimeters, 0.10 millimeters to 20.00 millimeters, or 0.20 millimeters to 15.00 millimeters.

In accordance with a number of embodiments of the present disclosure, the geopolymer thermal protection layer 110 can be formed by curing geopolymer precursors, e.g., geopolymer precursors are included in a geopolymer precursor composition. Geopolymer precursors can react with other geopolymer precursors to form the geopolymer 112.

Geopolymer precursor compositions can include an aluminosilicate reactant. The aluminosilicate reactant is a geopolymer precursor. The aluminosilicate reactant is an aluminosilicate. Aluminosilicates are compounds that include an aluminum atom, a silicon atom, and an oxygen atom. The aluminosilicate reactant can be selected from the group consisting of fly ash, calcined clay, metallurgical slag, and combinations thereof.

Fly ash is byproduct that is formed from the combustion of coal. For example, electric power plant utility furnaces can burn pulverized coal and produce fly ash. The structure, composition, and other properties of fly ash can depend upon the composition of the coal and the combustion process by which fly ash is formed. American Society for Testing and Materials (ASTM) C618 standard recognizes differing classes of fly ashes, such as Class C fly ash and Class F fly ash. Class C fly ash can be produced from burning lignite or sub-bituminous coal. Class F fly ash can be produced from burning anthracite or bituminous coal. For one or more embodiments, the fly ash can be selected from the group consisting of Class F fly ash, Class C fly ash, and combinations thereof.

As used herein, "clay" refers to hydrous aluminum phyllosilicates. Clay can include variable amounts of iron, magnesium, alkali metals, and/or alkaline earth metals. Examples of clay include, but are not limited to antigorite, chrysotile, lizardite, halloysite, kaolinite, illite, montmorillonite, vermiculite, talc, palygorskite, pyrophyllite, biotite, muscovite, phlogopite, lepidolite, margarite, glauconite, and combinations thereof. Clay can undergo calcination to form calcined clay. The calcination can include exposing the clay to a temperature from 500 °C to 1000 °C for a time interval from 1 hour to 24 hours.

Metallurgical slag can be formed in a number of processes, including some processes employing a blast furnace. For example, metallurgical slag can be formed in a process that forms pig iron from iron ore. Some metallurgical slag can include 27 weight percent to 38 weight percent SiO₂ and 7 weight percent to 12 weight percent Al₂O₃. Metallurgical slag can also include, CaO, MgO, Fe₂O₃, and MnO, for example.

Geopolymer precursor compositions can include an alkaline activator. The alkaline activator is a geopolymer precursor. Alkaline activation involves a reaction between aluminum silicates and/or compounds with alkalis and/or alkaline-earth elements in a caustic environment. For one or more embodiments the alkaline activator includes sodium silicate. Sodium silicate, as used herein, refers to compounds that include sodium oxide (Na₂O and silica (SiO₂). The sodium silicate can have a weight ratio of SiO₂/Na₂O from 1.0 to 10.0, where the weight ratio is expressed as quotient of a weight of SiO₂ divided by a weight of Na₂O. All individual values and subranges from and including 1.0 to 10.0 are included herein and disclosed herein; for example, sodium silicate can have a weight ratio of SiO₂/ Na₂O in a range with a lower limit of 1.0, 1.25, or 1.5 to an upper limit 10.0, 8.0, or 6.0, where the weight ratio is expressed as quotient of a weight of SiO₂ divided by a weight of Na₂O. For example, sodium silicate can have a weight ratio of SiO₂ Na₂O in a range of 1.0 to 10. 0, 1.25 to 8.0, or 1.5 to 6.0, where the weight ratio is expressed as quotient of a weight of SiO₂ divided by a weight of Na₂O Examples of sodium silicates include, but are not limited to, orthosilicate (Na₄SiO₄), metasilicate (Na₂SiO₃), disilicate (Na₂Si₂O₅), tetrasilicate (Na₂Si₄O₉), and combinations thereof. The sodium silicate may be utilized as a solid, a solution, or combinations thereof. Sodium silicate solution can include water. The water, of the sodium silicate solution, may be employed in an amount having a value that is from 40 weight percent to 75 weight percent of the sodium silicate solution, such that a weight percent of the sodium oxide, a weight percent of the silica, and the weight percent of the water, of the sodium silicate solution, sum to 100 weight percent of the sodium silicate solution. All individual values and subranges from and including 40 weight percent to 75 weight percent are included herein and disclosed herein; for example, the water, of the sodium silicate solution, may in a range with a lower limit of 40 weight percent, 43 weight percent, or 45 weight percent to an upper limit 75 weight percent, 70 weight percent, or 65 weight percent, such that the weight percent of the sodium oxide, the weight percent of the silica, and the weight percent of the water, of the sodium silicate solution, sum to 100 weight percent of the sodium silicate solution. For example, the water, of the sodium silicate solution, may be in a range of 40 weight percent to 75 weight percent, 43 weight percent to 70 weight percent, or 45 weight percent to 70 weight percent, such that the weight percent of the sodium oxide, the weight percent of the silica, and the weight percent of the water, of the sodium silicate solution, sum to 100 weight percent of the sodium silicate solution. The alkaline activator can include an alkaline hydroxide. Examples of the alkaline hydroxide include, but are not limited to, sodium hydroxide and potassium hydroxide. The alkaline activator can be selected from the group consisting of sodium hydroxide, potassium hydroxide, and combinations thereof. For embodiments including the alkaline hydroxide, the alkaline hydroxide may be employed in an amount having a value that is up to 50 weight percent of the sodium silicate solution, such that the weight percent of the sodium oxide, the weight percent of the silica, the weight percent of the water, of the sodium silicate solution, and the weight percent of the alkaline hydroxide sum to 100 weight percent of the sodium silicate solution. All individual values and subranges from greater than 0 weight percent and including 50 weight percent are included herein and disclosed herein; for example, the alkaline hydroxide may be employed in range with a lower limit of greater than 0 weight percent to an upper limit of 50 weight percent, 45 weight percent, or 40 weight percent, such that the weight percent of the sodium oxide, the weight percent of the silica, the weight percent of the water, of the sodium silicate solution, and the weight percent of the alkaline hydroxide sum to 100 weight percent of the sodium silicate solution. For example, the alkaline hydroxide may be employed in an amount having a value in a range of greater than 0 weight percent to 50 weight percent, greater than 0 weight percent to 45 weight percent, or greater than 0 weight percent to 40 weight percent, such that the weight percent of the sodium oxide, the weight percent of the silica, the weight percent of the water, of the sodium silicate solution, and the weight percent of the alkaline hydroxide sum to 100 weight percent of the sodium silicate solution.

Geopolymer precursor compositions can include a continuous medium. The continuous medium can include water. The continuous medium can be employed for dissolution and/or hydrolyses of one or more of the geopolymer precursors.

Geopolymer precursor compositions can include varying amounts of components for differing applications. The aluminosilicate reactant can be from 20 weight percent to 80 weight percent of a composition weight, such that the aluminosilicate reactant weight percent, an alkaline activator weight percent, and a continuous medium weight percent sum to 100 weight percent of the composition weight. All individual values and subranges from and including 20 weight percent to 80 weight percent are included herein and disclosed herein; for example, the aluminosilicate reactant can be in a range with a lower limit of 20 weight percent, 25 weight percent, or 30 weight percent to an upper limit of 80 weight percent, 75 weight percent, or 70 weight percent. The alkaline activator can be from 20 weight percent to 80 weight percent of the composition weight, such that the aluminosilicate reactant weight percent, the alkaline activator weight percent, and the continuous medium weight percent sum to 100 weight percent of the composition weight. All individual values and subranges from and including 20 weight percent to 80 weight percent are included herein and disclosed herein; for example, the alkaline activator can be in a range with a lower limit of 20 weight percent, 25 weight percent, or 30 weight percent to an upper limit of 80 weight percent, 75 weight percent, or 70 weight percent. The continuous medium can be from 20 weight percent to 80 weight percent of the composition weight, such that the aluminosilicate reactant weight percent, the alkaline activator weight percent, and the continuous medium weight percent sum to 100 weight percent of the composition weight. All individual values and subranges from and including 20 weight percent to 80 weight percent are included herein and disclosed herein; for example, the continuous medium can be in a range with a lower limit of 20 weight percent, 25 weight percent, or 30 weight percent to an upper limit of 80 weight percent, 75 weight percent, or 70 weight percent.

In accordance with a number of embodiments of the present disclosure, the geopolymer precursor compositions have a silicon to aluminum mole ratio of 1.0: 0.1 to 1.0:3.3. In other words, the geopolymer thermal protection layer is formed by curing geopolymer precursors having a silicon to aluminum mole ratio of 1.0: 0.1 to 1.0:3.3. All individual values and subranges from and including a silicon to aluminum mole ratio of 1.0:0.1 to 1.0:3.3 are included herein and disclosed herein; for example, the geopolymer precursor compositions can have a silicon to aluminum mole ratio in a range with a lower limit of 1.0: 0.1, 1.0:0.5, or 1.0:1.0 to an upper limit of 1.0:3.3, 1.0:3.1, or 1.0:2.9. For example, the geopolymer thermal protection layer can be formed by curing geopolymer precursors having a silicon to aluminum mole ratio of in a range from 1.0:0.1 to 1.0:3.3, 1.0:0.5 to 1.0:3.1, or 1.0:1.0 to 1.0:2.9. As discussed, geopolymers, e.g., the geopolymer thermal protection layer, formed from the geopolymer precursor compositions having the silicon to aluminum mole ratio of 1.0:0.1 to 1.0:3.3 can have improved strength and/or fire resistance as compared to other geopolymers that are formed from compositions with other silicon to aluminum mole ratios. While not being bound to theory, it is believed that the geopolymers formed from the geopolymer precursor compositions having the silicon to aluminum moles ratios of 1.0:0.1 to 1.0:3.3 form three dimensional structures, in contrast to some compositions having more silicon to aluminum, which form two dimensional structures.

Geopolymer precursor compositions can include an aggregate. As used herein, aggregate refers to an inert material, e.g. a material that is substantially unreactive with the geopolymer precursors of the geopolymer precursor compositions. The aggregate remains intact during the geopolymerization reaction. Examples of the aggregate include, but are not limited to, sand, gravel, crushed stone, or combinations thereof. The aggregate can be particulate, e.g., separate and distinct particles. The aggregate may be of differing sizes and/or shapes for various applications. The aggregate can have a particle size distribution with an average diameter from 0.0625 millimeters tc 2.0 millimeters, as defined by ISO 14688, for example. All individual values and subranges from and including 0.0625 millimeters to 2.0 millimeters are included herein and disclosed herein; for example, the aggregate can have a particle size distribution with an average diameter in a range with a lower limit of 0.0625 millimeters, 0.07 millimeters, or 0.08 millimeters to an upper limit of 2.0 millimeters, 1.90 millimeters, or 1.80 millimeters. For example, the aggregate can have a particle size distribution with an average diameter in a range of 0.0625 millimeters to 2.0 millimeters, 0.07 millimeters to 1.90 millimeters, or 0.08 millimeters to 1.80 millimeters. In accordance with a number of embodiments of the present disclosure, the aggregate can be substantially spherical. However, embodiments are not so limited. In accordance with a number of embodiments of the present disclosure, the aggregate can be substantially non-spherical. Examples of substantially non-spherical shapes include, but are not limited to, cubic shapes, polygonal shapes, elongate shapes, irregular shapes and combinations thereof. For embodiments including the aggregate, the aggregate may be employed in an amount having a value that is up to 70 weight percent of a total weight of a geopolymer thermal protection layer, where the total weight of the geopolymer thermal protection layer is the sum of weights of the aluminosilicate reactant, the alkaline activator, the continuous medium, and the aggregate. All individual values and subranges and including from greater than 0 weight percent to 70 weight percent are included herein and disclosed herein; for example, the aggregate may be employed in a range with a lower limit of from greater than 0 weight percent, 10 weight percent, or 15 weight percent to an upper limit of 70 weight percent, 65 weight percent, or 60 weight percent. For example, the aggregate may be employed in a range of from greater than 0 weight percent to 70 weight percent, 10 weight percent to 65 weight percent, or 15 weight percent to 60 weight percent of a total weight of a geopolymer thermal protection layer, where the total weight of the geopolymer thermal protection layer is the sum of weights of the aluminosilicate reactant, the alkaline activator, the continuous medium, and the aggregate. The aggregate may help to reduce crack formation in the geopolymer, for example as compared to other geopolymers not including the aggregate. For some applications, cracks in the geopolymer can be undesirable. As an example, cracks can form in a geopolymers during curing of a geopolymer precursor composition and/or after the curing is complete.

In accordance with a number of embodiments of the present disclosure, the geopolymer precursor compositions can include an additional component, such as a hollow silicate material, among other additional components. Examples of hollow silicate materials include, but are not limited to glass spheres, aerogels, cenospheres, zeolites, mesoporous silicate structures, and combinations thereof. Aerogels include low density silicate structures produced by a sol-gel process. Cenospheres can be formed during a process of producing fly ash, for example. The hollow glass spheres may include an additive, such as alumina, for example. Zeolites include natural and synthetic alumina/silicates, for example, and may contain a metal cation. Mesoporous silicate structures include structures obtained by forming silica around an organic template that can be removed after the silica forms. For differing applications the additional component may be employed in various amounts.

As discussed herein, geopolymer precursor compositions can be cured to form the geopolymer 112, e.g., a geopolymer thermal protection layer 110. Geopolymer 112, e.g., the geopolymer thermal protection layer 110, can be represented by Formula I:

(Formula I) (M)_{y}[-(SiO₂)_{z}-AlO₂]ₓ·wH₂O

wherein each M independently is a cation of Group 1 of the Periodic Table of the Elements; x is an integer of 2 or higher and represents a number of polysialate repeat units; y is a rational or irrational number selected so that a ratio of y to x is greater than zero (y/x > 0), and preferably from greater than zero to less than or equal to 2 (0 < y/x ≤ 2); z is a rational or irrational number of from 1 to 35; and w is a rational or irrational number such that ratio of w to x (w/x) represents a ratio of moles of water per polysialate repeat unit. The z represents a molar ratio equal to moles of silicon atoms to moles of aluminum atoms (Si/Al) in the polysialate. The distribution of the SiO₂ functional groups in the geopolymer may be characterized as being random. Thus, z can be a rational or irrational number. Unless otherwise noted, the phrase "Periodic Table of the Elements" refers to the official periodic table, version dated June 22, 2007, published by the International Union of Pure and Applied Chemistry (IUPAC).

Geopolymer 112, e.g., the geopolymer thermal protection layer 110, can be formed by curing the geopolymer precursor compositions at a temperature of 20 °C to 150 °C. All individual values and subranges from and including 20 °C to 150 °C are included herein and disclosed herein; for example, geopolymer can be formed by curing the geopolymer precursor compositions at a temperature in a range with a lower limit of 20 °C, 25 °C, 30 °C to an upper limit of 150 °C, 140 °C, or 130 °C. For example, geopolymer 112 can be formed by curing the geopolymer precursor compositions at a temperature in a range of 20 °C to 150 °C, 25 °C to 140 °C, or 30 °C to 130 °C. For various applications, the geopolymer 112 can be formed by curing the geopolymer precursor compositions for differing time intervals. The geopolymer 112 can be formed by curing the geopolymer precursor compositions for a time interval of less than one minute up to 28 days, for example. All individual values and subranges from and including less than one minute to 28 days are included herein and disclosed herein; for example, the geopolymer can be formed by curing the geopolymer precursor compositions for a time interval in a range with a lower limit of less than one minute, one minute, or 5 minutes to an upper limit of 28 days, 24 days, or 20 days. For example, the geopolymer 112 can be formed by curing the geopolymer precursor compositions for a time interval in a range from less than one minute to 28 days, one minute to 24 days, or 5 minutes to 20 days. For one or more embodiments, the geopolymer precursor compositions can be applied to a substrate, e.g. such as the foam material 104 and/or facings 106, 108, discussed herein, and cured thereon. The geopolymer precursor compositions can be applied to the substrate by various procedures, such as dipping, spraying, rolling, troweling, or another procedure.

As illustrated in Figure 1B, the geopolymer thermal protection layer 110, which includes geopolymer 112, can be adhered to the foam material 104, e.g., via a connective interface 114. For one or more embodiments, the connective interface 114 can include an adhesive material. The adhesive material can include a crosslinking adhesive, such as a thermoset adhesive. For example, the adhesive material can include a polyisocyanurate, a urethane, e.g., a urethane glue, an epoxy system, or a sulfonated polystyrene, among other crosslinking adhesives. In accordance with a number of embodiments of the present disclosure, the adhesive material can bind the geopolymer thermal protection layer 110 to the foam material 104. For embodiments including the adhesive material, the adhesive material may be employed in various amounts, e.g., an amount sufficient to adhere the geopolyner thermal protection layer 110 to the foam material 104. However, embodiments are not so limited. For one or more embodiments, the geopolymer thermal protection layer 110 adhered to the foam material 104 without the adhesive material, e.g., the connective interface 114 does not include the adhesive material.

The geopolymer thermal protection layer 110 can have a thickness 111 of 0.5 millimeters to 100 millimeters. All individual values and subranges from 0.5 millimeters to 100 millimeters are included herein and disclosed herein; for example, the geopolymer thermal protection layer 110 can have a thickness 111 from an upper limit of 100 millimeters, 80 millimeters, or 60 millimeters to a lower limit of 0.5 millimeters, 1 millimeter, or 2 millimeters. For example, geopolymer thermal protection layer 110 can have a thickness 111 of 0.5 millimeters to 100 millimeters, 1 millimeter to 80 millimeters, or 2 millimeters to 60 millimeters.

As discussed herein, the geopolymer thermal protection layer 110 may provide improved fire resistance for the fire resistant composite structures 102, as compared to other panel approaches, such as panels not having the geopolymer thermal protection layer 110 disclosed herein. For example, the geopolymer thermal protection layer 110 can help for the foam material 104 to receive less thermal energy, as compared to panels not having the geopolymer-aerogel composite layer 110, when exposed to similar heating. As an example, fire resistance can be determined by exposing a material, e.g., fire resistant composite structures 102, to heating from a furnace and thereafter measuring a temperature rise with time on a side of the material opposite to the furnace and/or at a certain distance across a thickness of the material. Achieving a lower temperature on and/or at a portion of the material, as compared to a corresponding temperature on another material, under similar furnace heating conditions can be considered an improved fire resistance. For some applications, varying the thickness of a geopolymer thermal protection layer and/or incorporating additional geopolymer thermal protection layers can help to provide an improved fire resistance.

As illustrated in Figure 1B, the geopolymer thermal protection layer 110 can be adhered to the first facing 106, e.g., via a second connective interface 116. For one or more embodiments, the connective interface 116 can include an adhesive material as discussed herein. However, embodiments are not so limited. For one or more embodiments, the geopolymer thermal protection layer 110 adhered to the first facing 106 without the adhesive material, e.g., the connective interface 116 does not include the adhesive material.

Referring again to Figure 1B, the first facing 106 can be configured to face a heat source 120, e.g., a fire, among other heat sources. In the example illustrated in Figure 1B, heat can transfer from the heat source 120 to the first facing 106, then to the geopolymer thermal protection layer 110, and then to the foam material 104. Locating the geopolymer thermal protection layer 110 in front of the foam material 104, relative to heat source 120 may help to provide a desirable effectiveness of the geopolymer thermal protection layer 110 to help protect the foam material 104 and/or provide the fire resistant composite structure 102 with the improved fire resistance discussed herein.

Figure 2 is cross-sectional view of a fire resistant composite structure 202 in accordance with a number of embodiments of the present disclosure. As shown in Figure 2, the fire resistant composite structure 202 may include the first geopolymer thermal protection layer 210-1 and the second geopolymer thermal protection layer 210-2. The second geopolymer thermal protection layer 210-2 can have properties similar to the properties of the first geopolymer thermal protection layer 210-1, as discussed herein. For example, the second geopolymer thermal protection layer 210-2 can be formed by curing the geopolymer precursor compositions discussed herein.

For one or more embodiments, the second geopolymer thermal protection layer 210-2 is located between the foam material 204 and the second facing 208. Locating the second geopolymer thermal protection layer 210-2 between the foam material 204 and the second facing 208 may help to protect the foam material 204 from heat that can transfer from the second facing 208 to the foam material 204. Additionally, locating the second geopolymer thermal protection layer 210-2 between the foam material 204 and the second facing 208 may help to provide a lower temperature, for example, on a surface of the first facing 206 when the second facing 208 is exposed to a heat source, as compared to a panel not having the second geopolymer thermal protection layer 210-2 between the foam material 204 and the second facing 208.

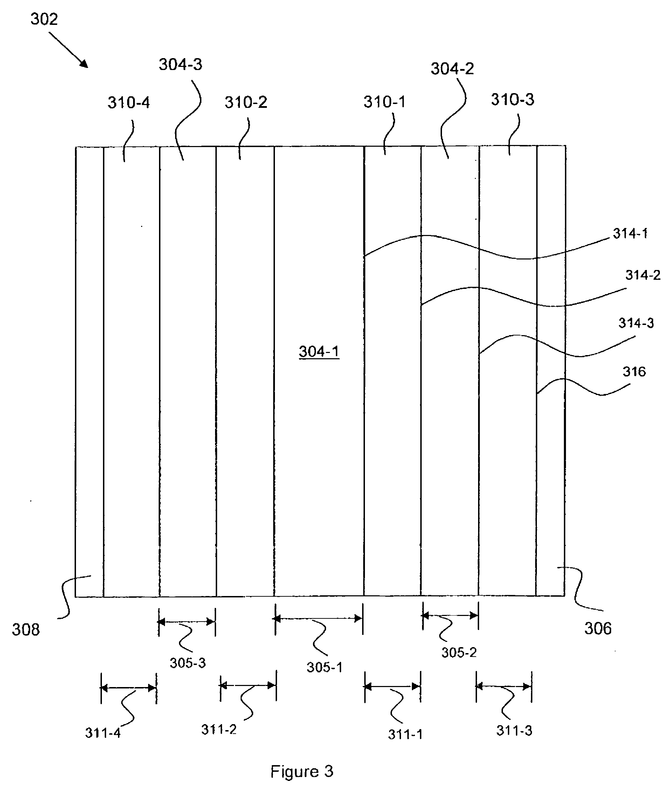

Figure 3 is cross-sectional view of a fire resistant composite structure 302 in accordance with a number of embodiments of the present disclosure. As shown in Figure 3, the fire resistant composite structure 302 can include a plurality of geopolymer thermal protection layers 310-1, 310-3 between the foam material 304-1 and the first facing 306. While the example illustrated in Figure 3 includes two geopolymer thermal protection layers 310-1, 310-3 between the foam material 304-1 and the first facing 306, embodiments are not so limited. For example the fire resistant composite structure 302 can include three, four, five, six, seven, eight, nine, ten, or even more geopolymer thermal protection layers between the foam material 304-1 and the first facing 306.

As shown in Figure 3, the fire resistant composite structure 302 can include a plurality of geopolymer thermal protection layers 310-2, 310-4 between the foam material 304-1 and the second facing 308. While the example illustrated in Figure 3 includes two geopolymer thermal protection layers 310-2, 310-4 between the foam material 304-1 and the second facing 308, embodiments are not so limited. For example the fire resistant composite structure 302 can include three, four, five, six, seven, eight, nine, ten, or even more geopolymer thermal protection layers between the foam material 304-1 and the second facing 308.

As shown in Figure 3, the fire resistant composite structure 302 can include a plurality of the foam materials 304-1, 304-2, 304-3. For one or more embodiments, each of the foam materials 304-1, 304-2, or 304-3 separates, e.g., is located between, two of the geopolymer thermal protection layers. While the example illustrated in Figure 3 includes three foam materials 304-1, 304-2, 304-3, embodiments are not so limited. For example the fire resistant composite structure 302 can include four, five, six, seven, eight, nine, ten, or even more of the foam materials.

The fire resistant composite structures 02, as disclosed herein, may be formed by a variety of processes. For example, the fire resistant composite structures 02 may be formed by a continuous process, such as a continuous lamination process employing a double conveyor arrangement wherein components of a geopolymer thermal protection layer 10 can be deposited, e.g., poured or sprayed, onto a first facing 06 surface, which may be flexible or rigid; then, a reaction mixture for forming a foam material 04 can be deposited, e.g., poured or sprayed, onto the curing geopolymer thermal protection layer components; then a second facing 08 surface can be contacted with the reaction mixture for forming the foam material 04. For various applications other formation processes may be employed. For example, the components of the second geopolymer thermal protection layer 10, can be deposited, e.g., poured or sprayed, directly onto an interior surface of the second facing 08 or alternatively on a substrate that will carry said curing geopolymer composition in between, the interior surface of the second facing and the curing foam forming composition. The said substrate will then remain incorporated at the foam-geopolymer interface. Additionally, the fire resistant composite structures 02, as disclosed herein, may be formed by a discontinuous process including depositing, e.g., pouring or spraying, the components of a geopolymer thermal protection layer on the first facing 06 and/or the second facing 08. Then the first and second facings, with their geopolymer thermal protection layers may be placed in a press and a reaction mixture for forming a foam material 04 can be deposited, e.g., poured or injected, between the first and second facings 06, 08.

### EXAMPLES

In the Examples, various terms and designations for materials were used including, for example, the following:
Sodium silicate solution (alkaline activator, Grade 52 sodium silicate solution, available from the Occidental Chemical Corporation); class F fly ash (aluminosilicate reactant, available from BORAX,®); continuous medium (water, deionized, laboratory produced); facing (0.3 millimeter thick type 304 stainless steel plate); additional component (censopshere, CTB150, available from Ceno Technologies Inc.).

### Geopolymer precursor composition

A geopolymer precursor composition was prepared as follows. Water (12.5 grams) and sodium silicate solution (37.5 grams) were added to a container and mixed. Class F fly ash (162.5 grams) and silica sand (50.0 grams) were added to the contents of the container and mixed with a high shear mixer at 700-900 rotations per minute (Model L1U08 mixer, available from LIGHTNIN®). The geopolymer precursor composition had a silicon to aluminum mole ratio of 1.00:2.68.

### Example 1 (Reference)

A fire resistant composite structure, Example 1, was fabricated as follows. The prepared geopolymer precursor composition described above was cast into a die; then a foam material was pressed into the cast geopolymer precursor composition. The cast geopolymer precursor composition cured for 24 hours at 60 °C to form a 10 millimeter thick geopolymer thermal protection layer bonded to the foam material. The foam material was polyisocyanurate foam made with VORATHERM ™ CN604 polyisocyanurate system having a thickness of 160 millimeters, available from The Dow Chemical Company. A 0.3 millimeter thick type 304 stainless steel plate was attached to the geopolymer thermal protection layer with a non-foaming polyurethane (FoamFast 74, available from 3M™). No cracks were visually observed in the cast geopolymer.

### Multiple geopolymer thermal protection layers

Geopolymer precursor compositions as described above were cast into a die and cured for 24 hours at 60 °C. The cured geopolymers were cut to form a number of 2 millimeter thick geopolymer thermal protection layers, a number of 3 millimeter thick geopolymer thermal protection layers, and a number of 5 millimeter thick geopolymer thermal protection layers.

### Multiple foam materials

A foam material, which was a polyisocyanurate foam made with VORATHERM™ CN604 polyisocyanurate system, available from The Dow Chemical Company, was cut into a number of 8 millimeter thick foam materials, a number of 21 millimeter thick foam materials, a number of 59 millimeter thick foam materials, a number of 65 millimeter thick foam materials, and a number of 85 millimeter thick foam materials.

### Example 2 (Reference)

A fire resistant composite structure, Example 2, was fabricated as follows. Sequentially, a 5 millimeter thick geopolymer thermal protection layer, a 21 millimeter thick foam material, a 3 millimeter thick geopolymer thermal protection layer, a 21 millimeter thick foam material, a 3 millimeter thick geopolymer thermal protection layer, a 21 millimeter thick foam material, a 3 millimeter thick geopolymer thermal protection layer, a 21 millimeter thick foam material, a 3 millimeter thick geopolymer thermal protection layer, and a 59 millimeter thick foam material were secured together with thermal resistant tape. A 0.3 millimeter thick type 304 stainless steel plate was attached to the 5 millimeter geopolymer thermal protection layer with a non-foaming polyurethane (FoamFast 74, available from 3M™).

### Example 3 (Reference)

A fire resistant composite structure, Example 3, was fabricated as follows. Sequentially, a 5 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, an 8 millimeter thick foam material, a 2 millimeter thick geopolymer thermal protection layer, and a 65 millimeter thick foam material were secured together with thermal resistant tape. A 0.3 millimeter thick type 304 stainless steel plate was attached to the 5 millimeter geopolymer thermal protection layer with a non-foaming polyurethane (FoamFast 74, available from 3M™).

### Comparative Example A

Comparative Example A was fabricated as follows. A foam material was formed. The foam material was polyisocyanurate foam made with VORATHERM™ CN604 polyisocyanurate system having a thickness of 160 millimeters, available from The Dow Chemical Company. A 0.3 millimeter thick type 304 stainless steel plate was attached to the foam material with a non-foaming polyurethane (FoamFast 74, available from 3M™).

Fire resistance of Examples 1-3 and Comparative Example A was tested as follows. A 76.2 millimeter by 76.2 millimeter hole was formed in the door of a THERMO SCIENTIFIC® Thermolyne Model 48000 furnace. The furnace was heated to 1000 °C following a temperature versus time curve in accordance to the one used in EN 1361-1 testing standard, which is the same heating curve in ISO-834-1. Each of the steel plates of Examples 1-3 and Comparative Example A was respectively clamped to the hole in the furnace door. Thermocouples were placed into the foam material of Example 1 at 10 millimeters, 80 millimeters, and 120 millimeters, as measured from the stainless steel plate exposed to the heat source to record temperatures and determine the fire resistance. Thermocouples were placed into the foam material of Example 2 at 80 millimeters and 120 millimeters, as measured from the stainless steel plate exposed to the heat source to record temperatures and determine the fire resistance. Thermocouples were placed into the foam material of Example 3 at 80 millimeters, 100 millimeters, and 120 millimeters, as measured from the stainless steel plate exposed to the heat source to record temperatures and determine the fire resistance. For experimental purposes Examples 1-3 did not include a second facing. Table 1 shows data corresponding to the temperatures for each thermocouple location for Examples 1-3 measured at one hour. Thermocouples were placed into the foam material of Comparative Example A at 10 millimeters, 80 millimeters, and 120 millimeters, as measured from the stainless steel plate exposed to the heat source to record temperatures and determine the fire resistance. Comparative Example A did not include a second facing. Table 2 shows data corresponding to the temperatures for each thermocouple location for Comparative Example A measured at one hour.

**Table 1**

| | Test time 1 hour |
|---|---|
| Example 1 10 mm thermocouple | 583 °C |
| Example 1 80 mm thermocouple | 153 °C |
| Example 1 120 mm thermocouple | 59 °C |
| Example 2 80 mm thermocouple | 109 °C |
| Example 2 120 mm thermocouple | 42 °C |
| Example 3 80 mm thermocouple | 92 °C |
| Example 3 100 mm thermocouple | 52 °C |
| Example 3 120 mm thermocouple | 40 °C |

**Table 2**

| | Test time 1 hour |
|---|---|
| Comparative Example A 10 mm thermocouple | 651 °C |
| Comparative Example A 80 mm thermocouple | 173 °C |
| Comparative Example A 120 mm thermocouple | 59 °C |

The data of Tables 1-2 shows the Example 1-3 temperatures at each thermocouple location were lower than Comparative Example A temperatures at each corresponding thermocouple for the same test times. The lower temperatures of Examples 1-3, as compared to those of Comparative Example A, indicate that each of Examples 1-3 has an improved fire resistance, as compared to Comparative Example A.

### Example 4 (Reference)

A fire resistant composite structure, Example 4, was fabricated as follows.

A geopolymer precursor composition was prepared as follows. Water (12.5 grams) and sodium silicate solution (37.5 grams) were added to a container and mixed. Class F fly ash (162.5 grams) and silica sand (50.0 grams) were added to the contents of the container and mixed with a high shear mixer at 700-900 rotations per minute (Model L1U08 mixer, available from LIGHTNIN®). The geopolymer precursor composition had a silicon to aluminum mole ratio of 1.00:2.68. Two batches of the geopolymer precursor composition were each respectively cast into a die and cured for 24 hours at 60 °C. The cured geopolymers had a density of 2.03 grams per cubic centimeter. The cured geopolymers were each formed into two 7.5 millimeter thick geopolymer thermal protection layers. Sequentially, a 7.5 millimeter thick geopolymer thermal protection layer, an 85 millimeter thick foam material, and à 7.5 millimeter thick geopolymer thermal protection layer, were secured together with thermal resistant tape. A 0.3 millimeter thick type 304 stainless steel plate was attached to the 7.5 millimeter geopolymer thermal protection layer with a non-foaming polyurethane (FoamFast 74, available from 3M™).

### Example 5 (Reference)

A fire resistant composite structure, Example 5, was fabricated as follows.

A geopolymer precursor composition was prepared as follows. Water (7.0 grams) and sodium silicate solution (14.3 grams) were added to a container and mixed. Class F fly ash (31.0 grams) and cenosphere (8.6 grams) were added to the contents of the container and mixed with a high shear mixer at 700-900 rotations per minute (Model LIU08 mixer, available from LIGHTNIN®). The geopolymer precursor composition had a silicon to aluminum mole ratio of 1.00:2.65. Two batches of the geopolymer precursor composition were each respectively cast into a die and cured for 24 hours at 60 °C. The cured geopolymers were each formed into two 7.5 millimeter thick geopolymer thermal protection layers. Sequentially, a 7.5 millimeter thick geopolymer thermal protection layer, an 85 millimeter thick foam material, and a 7.5 millimeter thick geopolymer thermal protection layer, were secured together with thermal resistant tape. A 0.3 millimeter thick type 304 stainless steel plate was attached to the 7.5 millimeter geopolymer thermal protection layer with a non-foaming polyurethane (FoamFast 74, available from 3M™).

### Example 6 (Reference)

A fire resistant composite structure, Example 6, was fabricated as follows.

A geopolymer precursor composition was prepared as follows. Water (8.0 grams) and sodium silicate solution (20.0 grams) were added to a container and mixed. Class F fly ash (21.5 grams) and cenosphere (13.9 grams) were added to the contents of the container and mixed with a high shear mixer at 700-900 rotations per minute (Model L1U08 mixer, available from LIGHTNIN®). The geopolymer precursor composition had a silicon to aluminum mole ratio of 1.00:2.74. Two batches of the geopolymer precursor composition were each respectively cast into a die and cured for 24 hours at 60 °C. The cured geopolymers had a density of 0.92 grams per cubic centimeter. The cured geopolymers were each formed into two 7.5 millimeter thick geopolymer thermal protection layers. Sequentially, a 7.5 millimeter thick geopolymer thermal protection layer, an 85 millimeter thick foam material, and a 7.5 millimeter thick geopolymer thermal protection layer, were secured together with thermal resistant tape. A 0.3 millimeter thick type 304 stainless steel plate was attached to the 7.5 millimeter geopolymer thermal protection layer with a non-foaming polyurethane (FoamFast 74, available from 3M™).

Fire resistance of Examples 4-6 was tested as follows as for Examples 1-3 and Comparative Example A. Thermocouples were placed into the foam material for each of Examples 4-6 at 100 millimeters, as measured from the stainless steel plates exposed to the heat source to record temperatures and determine the fire resistance. For experimental purposes, Examples 4-6 did not include a second facing. Table 3 shows data corresponding to the temperatures for each thermocouple location for Examples 4-6 measured at one hour, two hours, and two and a half hours.

**Table 3**

| | Test time 1 hour | Test time 2 hours | Test time 2.5 hours |
|---|---|---|---|
| Example 4 100 mm thermocouple | 59 °C | 93 °C | 106 °C |
| Example 5 100 mm thermocouple | 58 °C | 95 °C | 108 °C |
| Example 6 100 mm thermocouple | 62 °C | 92 °C | 93 °C |

Example 4 included two geopolymer thermal protection layers. As discussed and shown herein, the geopolymer thermal protection layer can provide an improved fire resistance as compared to other panel approaches, such as panels not having the geopolymer thermal protection, for instance Comparative Example A. The data of Table 3 show the Example 5-6 temperatures at the 100 millimeter thermocouple location were lower than and/or comparable to the Example 4 temperatures at the 100 millimeter thermocouple location for the same test times. The lower and/or comparable temperatures of Examples 5-6, as compared to Example 4, indicate that each of Examples 4-6 has an improved fire resistance, as compared to other panel approaches, such as panels not having the geopolymer thermal protection, for instance Comparative Example A.

## Claims

1. A fire resistant composite structure comprising:
a foam material located between a first facing and a second facing;
a first geopolymer thermal protection layer located between the foam material and the first facing material, wherein the first geopolymer thermal protection layer is formed by curing geopolymer precursors having a silicon to aluminum mole ratio in a range of 1.0:0.1 to 1.0:3.3; and
a second geopolymer thermal protection layer located between the foam material and the second facing.

2. The structure of claim 1, wherein the first geopolymer thermal protection layer is formed by curing a geopolymer precursor composition having an aluminosilicate reactant, an alkaline activator, and a continuous medium.

3. The structure of claim 2, wherein the aluminosilicate reactant is from 20 weight percent to 80 weight percent of a composition weight, the alkaline activator is from 20 weight percent to 80 weight percent of the composition weight, and the continuous medium is from 20 weight percent to 80 weight percent of the composition weight, such that the aluminosilicate reactant weight percent, the alkaline activator weight percent, and the continuous medium weight percent sum to 100 weight percent of the composition weight.

4. The structure of any one of claims 2-3, wherein the aluminosilicate reactant is selected from the group consisting of coal fly ash, calcined clay, metallurgical slag, and combinations thereof and the alkaline activator includes sodium silicate.

5. The structure of any one of claims 1-4, further including a second foam material located between the first geopolymer thermal protection layer and a third geopolymer thermal protection layer.

6. The structure of any one of claims 1-5, further including a third foam material located between the second geopolymer thermal protection layer and a fourth geopolymer thermal protection layer.

7. The structure of claim 5, wherein the coal fly ash is selected from Class F coal fly ash, Class C coal fly ash, and combinations thereof.

8. The structure of claim 2, wherein the alkaline activator includes an alkaline hydroxide selected from sodium hydroxide, potassium hydroxide, and combinations thereof.

9. The structure of claim 1, wherein the foam material is a thermoset foam.

10. The structure of claim 9, wherein the thermoset foam is a polyisocyanurate foam or a polyurethane foam.

11. The structure of claim 1, wherein the geopolymer thermal protection layer includes an aggregate.

## Patentansprüche

1. Eine feuerfeste Verbundstruktur, die Folgendes beinhaltet:
einen Schaumstoff, der sich zwischen einem ersten Belag und einem zweiten Belag befindet;
eine erste Geopolymerwärmeschutzschicht, die sich zwischen dem Schaumstoff und dem ersten Belagmaterial befindet, wobei die erste Geopolymerwärmeschutzschicht durch das Aushärten von Geopolymervorläufern mit einem Silicium-zu-Aluminium-Molverhältnis in einem Bereich von 1,0 : 0,1 bis 1,0 : 3,3 gebildet wird; und
eine zweite Geopolymerwärmeschutzschicht, die sich zwischen dem Schaumstoff und dem zweiten Belag befindet.

2. Struktur gemäß Anspruch 1, wobei die erste Geopolymerwärmeschutzschicht durch das Aushärten einer Geopolymervorläuferzusammensetzung mit einem Aluminiumsilikatreaktionsmittel, einem Alkaliaktivator und einem kontinuierlichen Medium gebildet wird.

3. Struktur gemäß Anspruch 2, wobei das Aluminiumsilikatreaktionsmittel von 20 Gewichtsprozent bis 80 Gewichtsprozent eines Gewichts der Zusammensetzung ausmacht, der Alkaliaktivator von 20 Gewichtsprozent bis 80 Gewichtsprozent des Gewichts der Zusammensetzung ausmacht und das kontinuierliche Medium von 20 Gewichtsprozent bis 80 Gewichtsprozent des Gewichts der Zusammensetzung ausmacht, so dass sich die Gewichtsprozent des Aluminiumsilikatreaktionsmittels, die Gewichtsprozent des Alkaliaktivators und die Gewichtsprozent des kontinuierlichen Mediums summieren, um 100 Gewichtsprozent des Gewichts der Zusammensetzung auszumachen.

4. Struktur gemäß einem der Ansprüche 2-3, wobei das Aluminiumsilikatreaktionsmittel aus der Gruppe ausgewählt ist, die aus Kohlenflugasche, kalziniertem Ton, metallurgischer Schlacke und Kombinationen davon besteht und der Alkaliaktivator Natriumsilicat umfasst.

5. Struktur gemäß einem der Ansprüche 1-4, die ferner einen zweiten Schaumstoff umfasst, der sich zwischen der ersten Geopolymerwärmeschutzschicht und einer dritten Geopolymerwärmeschutzschicht befindet.

6. Struktur gemäß einem der Ansprüche 1-5, die ferner einen dritten Schaumstoff umfasst, der sich zwischen der zweiten Geopolymerwärmeschutzschicht und einer vierten Geopolymerwärmeschutzschicht befindet.

7. Struktur gemäß Anspruch 5, wobei die Kohlenflugasche aus Kohlenflugasche Klasse F, Kohlenflugasche Klasse C und Kombinationen davon ausgewählt ist.

8. Struktur gemäß Anspruch 2, wobei der Alkaliaktivator ein Alkalihydroxid, ausgewählt aus Natriumhydroxid, Kaliumhydroxid und Kombinationen davon, umfasst.

9. Struktur gemäß Anspruch 1, wobei der Schaumstoff ein Duroplastschaum ist.

10. Struktur gemäß Anspruch 9, wobei der Duroplastschaum ein Polyisocyanuratschaum oder ein Polyurethanschaum ist.

11. Struktur gemäß Anspruch 1, wobei die Geopolymerwärmeschutzschicht einen Zuschlagstoff umfasst.

## Revendications

1. Une structure de composite résistant au feu comprenant :
un matériau en mousse situé entre un premier parement et un deuxième parement ;
une première couche de protection thermique géopolymère située entre le matériau en mousse et le premier matériau de parement, la première couche de protection thermique géopolymère étant formée en durcissant des précurseurs géopolymères ayant un rapport en moles de silicium à aluminium compris dans un intervalle allant de 1,0/0,1 à 1,0/3,3 ; et
une deuxième couche de protection thermique géopolymère située entre le matériau en mousse et le deuxième parement.

2. La structure de la revendication 1, dans laquelle la première couche de protection thermique géopolymère est formée en durcissant une composition de précurseur géopolymère ayant un réactif aluminosilicate, un activateur alcalin, et un milieu continu.

3. La structure de la revendication 2, dans laquelle le réactif aluminosilicate va de 20 pour cent en poids à 80 pour cent en poids du poids d'une composition, l'activateur alcalin va de 20 pour cent en poids à 80 pour cent en poids du poids de la composition, et le milieu continu va de 20 pour cent en poids à 80 pour cent en poids du poids de la composition, de sorte que la somme du pourcentage en poids du réactif aluminosilicate, du pourcentage en poids de l'activateur alcalin, et du pourcentage en poids du milieu continu fait 100 pour cent en poids du poids de la composition.

4. La structure de l'une quelconque des revendications 2 et 3, dans laquelle le réactif aluminosilicate est sélectionné dans le groupe consistant en cendre volante de charbon, en argile calcinée, en laitier métallurgique, et en des combinaisons de ceux-ci et l'activateur alcalin comporte du silicate de sodium.

5. La structure de l'une quelconque des revendications 1 à 4, comportant en sus un deuxième matériau en mousse situé entre la première couche de protection thermique géopolymère et une troisième couche de protection thermique géopolymère.

6. La structure de l'une quelconque des revendications 1 à 5, comportant en sus un troisième matériau en mousse situé entre la deuxième couche de protection thermique géopolymère et une quatrième couche de protection thermique géopolymère.

7. La structure de la revendication 5, dans laquelle la cendre volante de charbon est sélectionnée parmi la cendre volante de charbon de Catégorie F, la cendre volante de charbon de Catégorie C, et des combinaisons de celles-ci.

8. La structure de la revendication 2, dans laquelle l'activateur alcalin comporte un hydroxyde alcalin sélectionné parmi l'hydroxyde de sodium, l'hydroxyde de potassium, et des combinaisons de ceux-ci.

9. La structure de la revendication 1, dans laquelle le matériau en mousse est une mousse thermodurcie.

10. La structure de la revendication 9, dans laquelle la mousse thermodurcie est une mousse de polyisocyanurate ou une mousse de polyuréthane.

11. La structure de la revendication 1, dans laquelle la couche de protection thermique géopolymère comporte un agrégat.
